# EUROPEAN PATENT SPECIFICATION

(11) **EP 1 483 869 B1**
(45) Date of publication and mention of the grant of the patent: **09.01.2008**
(21) Application number: 03708377.1
(22) Date of filing: 13.03.2003
(51) Int. Cl.: H04L 12/56

(54) **PACKET-BASED MOBILE NETWORK**
PAKETBASIERTES MOBILES NETZWERK
RESEAU MOBILE PAR PAQUETS

(30) Priority: 14.03.2002 US 364707 P
(43) Date of publication of application: 08.12.2004
(73) Proprietor: UTStarcom, Inc., Alameda, CA 94502 (US)
(72) Inventor: MAR, Jack, K., Richmond, British Colombia V6V 3B1 (CA); WILLIAMS, Stephen, J., Port Coquitlam, British Columbia V3C 5H2 (CA); LONG, Bradley, Miami,Florida,33133 CA (US); McLEOD, Ronald B., British Columbia V7E 1B2 (CA)
(74) Representative: Cooper, John
(86) International application number: PCT/IB2003/000905
(87) International publication number: WO 2003/077484

(56) References cited:
- EP-A- 1 045 562
- WO-A-02/39304
- US-A- 2002 089 949
- US-B1- 6 317 421
- MUSIKKA N ET AL: "ERICSSON'S IP-BASED BSS AND RADIO NETWORK SERVER" ON - ERICSSON REVIEW, ERICSSON. STOCKHOLM, SE, vol. 77, no. 4, 2000, pages 224-233, XP000969930 ISSN: 0014-0171

## Description

### BACKGROUND OF THE INVENTION

### FIELD OF THE INVENTION

This invention pertains in general to communication networks and in particular to communication networks for supporting mobile devices, such as cellular telephones.

### BACKGROUND ART

Cellular telephones and other mobile devices having wireless communications capabilities are ubiquitous in the modem world. Users expect the mobile devices to work everywhere at any time. Wireless networking providers, such as cellular telephone service providers, built extensive wireless networks in order to meet the users' expectations.

Nevertheless, existing wireless networks oftentimes do not meet the users' expectations or the networking providers' goals. Coverage is often spotty, especially indoors or in hilly areas. While the obvious solution to this problem is to provide more coverage by installing additional base stations, this solution can be expensive. In addition to the base stations, the provider will need to install back-end hardware such as controllers, switches, and trunks in order to control the base stations and support the increased network capacity.

Moreover, wireless networks have nearly reached their capacity limits in many metropolitan areas. As a result, users occasionally have problems obtaining service in crowded areas or during peak times. For example, it can be difficult to obtain service in stadiums, concert halls, and other venues where large crowds of potential mobile device users congregate.

There are also challenges in providing viable network coverage in rural, low-density areas. Generally, many remote base stations are needed to serve a large geographical area. Yet, if the area is low-density, the coverage provider typically uses only a single mobile switching centre (MSC) and base station controller (BSC) to support the network. This architecture means that high-cosy, long-distance trunks are needed to connect the remote base stations with the centralized MSC and BSC, often leading to high operating costs. The problems inherent in providing coverage in rural areas are greatly compounded when satellite circuits are used to provide inter-machine or public switched telephone network (PSTN) trunks. Satellite bandwidth is very expensive and must be conserved if the wireless network is to be profitable.

Thus there is a need for a flexible wireless networking system and architecture that can provide cost-effective coverage to mobile devices In both dense urban and sparse rural areas. Preferably, a solution meeting this need will allow networking providers to add extra wireless networking capacity to fill in coverage gaps and/or meet the needs of high traffic areas without incurring the costs normally inherent in extending the network. The solution will also preferably conserve satellite bandwidth, as well as reduce the operating costs incurred due to operating the MSCs and BSCs.

Musikka N et al: "Ericsson's IP-Based BSS and Radio Network Server", Ericsson Review, Ericsson, Stockholm, Sweden Vol. 77, no. 4, 2000, pages 224-233, XP000969930 ISSN: 0014-0171 describes a system in accordance with the introducing part of claim 1. However, this system does not enable mobile-to-mobile calls to be handled without transcoding.

### Brief Summary of the Invention

The above need is met by a telecommunications system that uses a packet switched network to provide communications facilities to mobile devices. The packet switched network, often referred to as the Internet Protocol (IP)-based network (because IP is a common packet-based protocol) allows the resources utilized to provide the communications capabilities to be distributed and shared in an efficient manner.

The present invention provides a telecommunications system as claimed in claim 1, a method of utilizing a packet-switched network as claimed in claim 14, and a base transceiver station as claimed in claim 25.

The invention improves network efficiency by reducing the need for transcoding when traffic passes from one mobile station to another. Other advantages and preferred features of the invention will be apparent from the following description and from the claims.

### BRIEF DESCRIPTION OF THE DRAWINGS

FIG. 1 is a high-level block diagram illustrating a telecommunications system according to an embodiment of the present invention;

FIG. 2 is a high-level, block diagram illustrating a portion of the telecommunications system of FIG. 1 from a functional perspective;

FIG. 3 is a block diagram illustrating the communications protocol stack in one embodiment of the air interface through which the radio and mobile device communicate;

FIG. 4 illustrates the protocol stack for carrying user media on the pathway between the network endpoint control module in the base transceiver station (BTS) and the corresponding module in the media gateway according to an embodiment of the telecommunications system;

FIGS. 5A-C illustrate protocol stacks for carrying control signals on the pathway between the mobility management module of the softswitch and the signaling management module of the BTS according to several embodiments of the telecommunications system;

FIGS. 6A-B illustrate protocol stacks for carrying control signals on the pathways among the media control modules of the BTSs and the media gateway and according to embodiments of the telecommunications system; and

FIG. 7 is a high-level block diagram illustrating entities of the telecommunications system of FIG. 1 and illustrating examples of media flow paths through the system.

The figures depict an embodiment of the present invention for purposes of illustration only. One skilled in the art will readily recognize from the following description that alternative embodiments of the structures and methods illustrated herein may be employed without departing from the principles of the invention described herein.

### DETAILED DESCRIPTION OF THE INVENTION

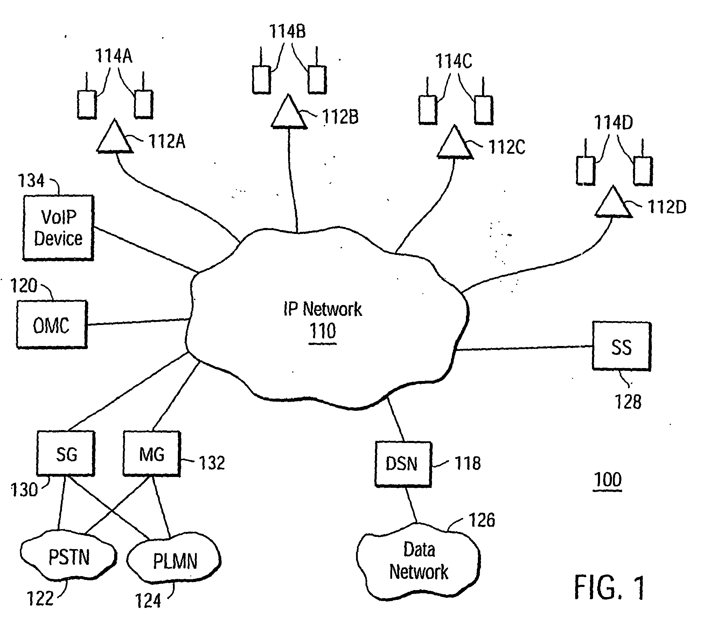

FIG. 1 is a high-level block diagram illustrating a telecommunications system 100 according to an embodiment of the present invention. Like elements are identified with like reference numerals. A letter after the reference numeral, such as "112A," indicates that the text refers specifically to the element having that particular reference numeral. A reference numeral in the text without a following letter, such as "112," refers to any or all of the elements in the figures bearing that reference number (e.g. "112" in the text refers to reference numerals "112A" and/or "112B" in the figures).

FIG. 1 illustrates a packet switched network 110 in communication with multiple entities, including base station transceivers (BTSs) 112, a softswitch (SS) 128, a signaling gateway 130, a media gateway 132, a voice over Internet protocol (VoIP) device 134, a data service serving node (DSN) 118, and an operations and maintenance console (OMC) 120. Each BTS 112 is illustrated as being in communication with two mobile devices 114. The signaling gateway 130 and media gateway 132 are each in communication with a public switched telephone network (PSTN) 122 and a public land mobile network (PLMN) 124. The DSN 118 is in communication with an external data service network 126.

The system 100 of FIG. 1 enables the entities on the network 110 to use non-packet based communications interfaces and protocols to communicate over the packet switched network 110 and support telecommunications on the mobile devices 114. The use of the packet switched network 110 allows the entities on the network 110, and the functionality provided by the system 100, to be distributed in an efficient and cost effective manner. In one embodiment, the system 100 separates the media functionality and feature provisioning from the control functionality. Certain control elements for the system 100, which are typically implemented in software, are preferably located at or near the BTSs 112. In contrast, control elements that can be shared and/or centralized are preferably located at a centralized location, such as at the SS 128. Media elements which are typically implemented with hardware, such as digital signal processing (DSP), are preferably located at the media gateway 132. This design reduces the expenses associated with the BTSs 112 and achieves overall efficiencies by allowing the relatively inexpensive BTSs 112 to be distributed throughout the geographic areas desiring coverage and the more expensive components at the SS 128 and/or media gateway 132 to be shared. Embodiments of the system 100 can distribute the entities and/or the functionality of the entities in a different manner than described herein.

Turning now to the individual entities illustrated in FIG. 1, the network 110 preferably uses conventional networking technologies, such as Ethernet and asynchronous transfer mode (ATM)-based circuits, to route packet-based data. A preferred embodiment of the network 110 uses the IP and its attendant protocols, such as the transmission control protocol (TCP), the user datagram protocol (UDP), or the stream control transport protocol (SCTP) to route data packets. For this reason, the network 110 is often referred to herein as the "IP network." Other embodiments of the system can use other protocols to carry and/or route the data. In one embodiment, the IP network 110 is dedicated to providing the functionality described herein. In another embodiment, all or part of the network 110 utilizes shared links such as links over the Internet or other publicly-accessible data networks or shared links provided by a communications services provider.

In one embodiment, the links of the IP network 110 are secure to prevent eavesdropping. The security can be provided by making the links physically-resistant to eavesdropping and/or encrypting the data carried on the links. In one embodiment, the entities on the network 110 use conventional security technology, such as the secure sockets' layer (SSL) and/or virtual private networks (VPNs) using Internet Security Protocol (IPSec) tunneling, to secure the data sent over the network 110.

Preferably, the IP network 110 includes quality of service (QoS) functionality in order to provide predictable throughput during periods of network congestion. More specifically, the QoS functionality allows the network 110 to guarantee that the entities on the network related to the telecommunications system (e.g., the BTSs 112) will receive at least a specified minimum bandwidth even when the network is otherwise congested. The IP network 110 may also lack QoS functionality. In this case, it is preferable, but not necessary, to "overbuild" the network 110 to reduce the chance of network congestion.

FIG. 1 illustrates four BTSs 112 coupled to the network 110. Although only four BTSs 112 are shown in FIG. 1, embodiments of the system 100 can have hundreds or thousands of BTSs in communication with network 110. Each BTS 112 serves a geographic region, or "cell," and is capable of communication with wireless-enabled mobile devices 114 in the region. In addition, each BTS 112 is preferably configured to communicate over the IP network 110.

The BTSs 112 preferably use radio frequency (RF)-based communications technologies to communicate with the mobile devices 114 or fixed wireless terminals. In other embodiments, one or more of the BTSs may support additional wireless communications technologies, such as infra-red. Multiple BTSs 112 may be used in proximity with each other to provide uniform communications coverage for an area.

In a preferred embodiment, the BTSs 112 communicate with cellular telephones and other suitably-enabled mobile devices 114 in their respective coverage areas. The BTSs 112 allow voice and/or data (individually and collectively referred to as "user media") to be communicated among the mobile devices 114 and other devices on the network 110, and, by extension, devices on the PSTN 122, PLMN 124, and/or external data service network 126.

These communications of user media among the devices are organized into "sessions." An example of a session is a voice telephone call. Other examples of sessions include video calls, fax calls, dialup connections to a server, a connection established for purposes of telemetry or telepresents, chat communications, etc.

A session exists between two or more "endpoints." As used herein, the term "endpoint" broadly refers to an entity through which user media are routed during a session. For example, the BTSs 112 and media gateway 132 are possible endpoints for sessions. The term "endpoint" can also refer to an addressable interface on the entity through which the user media are routed. For example, each BTS 1112, media gateway 132, or other entity on the IP network 110 typically has a number of individually-addressable endpoints. These endpoints allow the system 100 to keep track of multiple sessions routed through the same entity.

Depending upon the embodiment, the mobile devices 114 and BTSs 112 communicate user media via one or more different communications technologies including Code Division Multiple Access (CDMA), Global System for Mobile Communications (GSM), Universal Mobile Telecommunications System (UMTS), 802.11, and/or Bluetooth. Depending on the communications technology, the user media representing voice can be encoded with enhanced variable rate coding (EVRC), QualComm excited linear predictive (QCELP) coding, full rate (FR) coding, enhanced FR (EFR) coding, voice over IP (VoIP) coding, adaptive multi-rate (AMR) coding, etc. The mobile devices 114 and BTSs 112 can also preferably exchange user media representing data via the wireless application protocol (WAP), short message service (SMS) protocol, multimedia messaging service (MMS) protocol, and/or TCP/IP.

The BTSs 112 preferably encapsulate user media received from the mobile devices 114 in an IP-based representation suitable for transport across the IP network 110. The native format of the user media is preserved, but the user media are encapsulated in an encoding that functions with the IP. Likewise, the BTSs 112 preferably remove the encapsulation from user media received from the IP network 110. The encapsulated user media are preferably carried on the IP network 110 according to a real-time streaming protocol.

FIG. 1 shows two mobile devices 114 in communication with each BTS 112 even though any given BTS is typically in simultaneous communication with many mobile devices and mobile devices may be in communication with multiple BTSs. As used herein, the term "mobile device" covers all devices that may be in communication with the BTSs 112, regardless of whether a particular device is typically or actually "mobile." In addition to cellular telephones, mobile devices 114 may include personal digital assistants (PDAs), laptop or desktop computers having modules for supporting wireless telecommunications, etc. In one embodiment, the functionality of the BTS 112 and mobile device 114 is incorporated into one device.

Each mobile device 114 is preferably associated with at least one "subscriber." Each subscriber, in turn, is associated with a particular communication provider such as a nationwide cellular telephone service provider. As used herein, the term "subscriber" merely refers to the person and/or entity associated with a mobile device and does not imply that there is an actual subscription in place.

The VoIP device 134 is a wired or wireless communications device that directly interfaces with the IP network 110. In one embodiment, the VoIP device 134 is a special purpose telephone containing DSP functionality for encoding signals representative of voice or other audio into the VoIP representation and vice versa. In another embodiment, the VoIP device 134 includes a standard telephone coupled to an Internet access device (IAD). The IAD is connected between the telephone and the IP network 110 and converts audio signals between the representation utilized by the telephone and the VoIP. The SS 128 preferably controls the VoIP device 134 via control signals carried over the IP network 110 to provide standard telephone functionality.

The PSTN 122 is the conventional telephone network. User media on the PSTN 122 are typically encoded using pulse code modulation (PCM). The PLMN 124 is preferably a cellular telephone network operated by a cellular telephone service provider, such as AT&T, SPRINT, CINGULAR, etc. User media on the PLMN 124 are typically encoded using a native format of the mobile devices supported by the network, such as EVRC, QCELP, FR, EFR, VoIP, AMR, etc.

The DSN 118 supports and provides communications between servers on the external data service network 126 and the mobile devices 114 and/or other entities on the IP network 110 by routing data to the appropriate inbound/outbound locations. In one embodiment, the external network 126 is representative of the Internet at-large and the DSN 118 serves as the peering point between the IP network 110 and the Internet. In another embodiment, the external network 126 is a private and/or public network other than the Internet. Embodiments of the telecommunications system 100 can have multiple DSNs 118 connecting the IP network 110 to multiple other networks. The communications supported by the DSN 118 preferably enable WAP, SMS, MMS, and other web-enabled features on the mobile devices 114, as well as enabling general IP-based communication between the two networks.

The particular hardware and/or functionality provided by the DSN 118 depends upon the technology utilized by the mobile devices 114. If the mobile devices 114 utilize CDMA, the DSN 118 preferably includes a packet data serving node (PDSN). Similarly, if the mobile devices 114 utilize GSM or UMTS, the DSN 316 preferably includes a serving general packet radio service (GPRS) support node (SGSN).

The SS 128 preferably controls the operation of the BTS 112 and other devices on the IP network 110. In one embodiment, the SS 128 is formed of one or more modules executing on a computer system. As used herein, the term "module" refers to computer program logic and/or any hardware or circuitry utilized to provide the functionality attributed to the module. Thus, a module can be implemented in hardware, firmware, and/or software.

The SS 128 preferably provides session processing and controls media connection switching and signaling for the mobile devices 114 and any VoIP devices 134. The SS 128 also preferably provides mobility management for the mobile devices 114. The mobility management enables roaming capabilities. That is, mobility management allows the mobile devices to receive service as they move among the coverage areas provided by the BTSs 112 on the IP network 110 and external coverage areas (e.g., other coverage areas on the PLMN 124). The SS 128 preferably provides mobility management by supporting or interfacing to an external home location register (HLR) access functionality (or, in the case of UMTS networks, home subscriber server (HSS) access functionality). A HLR is a storage location that holds information about a given subscriber that the SS 128 and devices on the PLMN 124 use to authorize and provide services to the subscriber. Preferably, information for any given subscriber is kept in only one HLR. The SS 128 and devices on the PLMN 124 use either the IS-41 internetworking standards or GSM MAP to access the HLR.

In one example, the SS 128 maintains a HLR for at least some of the subscribers associated with the mobile devices 114 and makes the HLR accessible to the PLMN 124. In this or another embodiment, the HLRs for at least some of the subscribers utilizing mobile devices 114 in communication with the BTSs 112 are maintained on the PLMN 124 by a cellular telephone service provider and the SS 128 accesses the HLRs to authorize and provide services to the subscribers in the coverage areas provided by the BTSs 112 on the IP network 110.

The mobility management capabilities of the SS 128 allow it to control the subscribers' access to the local and external coverage areas. For example, the SS 128 can grant or deny service to a mobile device within the local coverage area provided by the BTSs 112 on the IP network 110. Similarly, the SS 128 can control whether a mobile device 114 associated with a subscriber having an account maintained by the SS 128 is allowed to obtain service on the PLMN network.

The mobility management capabilities of the SS 128 also include handoff (referred to as "handover" in GSM terminology). "Handoff" is the ability to keep an active session connected and functioning when a mobile device 114 on the session moves among the coverage areas provided by the BTSs 112 on the IP network 110 or other networks (e.g., the PLMN 124). The SS 128 also preferably uses its mobility management capabilities to enable location-based services to the mobile devices 114. In sum, the mobility management capabilities of the SS 128 generally allow a subscriber to use a mobile device 114 in the normal manner.

In one example, the signaling gateway 130 is also formed of one or more modules executing on a computer system. The signaling gateway 130 is preferably in communication with the IP network 110, the PSTN 122, and the PLMN 124 and operates in response to commands from the SS 128. The signaling gateway 130 performs media connection signaling to support sessions among the mobile devices 114 in communication with the BTSs 112, VoIP devices 134, and devices on the PSTN 122 and PLMN 124. The signaling gateway 130 also preferably handles signaling for providing mobility management for the mobile devices 114.

In one example, the media gateway 132,is likewise formed of one or more modules executing on a computer system. The media gateway 132 is preferably in communication with the IP network 110, the PSTN 122, and/or the PLMN 124 and serves as a gateway between the telephone networks and the IP network. The media gateway 132 converts user media (e.g., voice data) among the encodings utilized by the mobile devices 114, PSTN 122, PLMN 124, and VoIP devices 134. The media gateway 132 also adds and removes the IP encapsulation of user media sent and received via the IP network 110. The native formats of the mobile devices can be EVRC, QCELP coding, FR coding, EFR coding, VoIP coding, AMR coding, etc. The PLMN 124 typically uses these formats at the edge of the network, but converts the user media into PCM coding for internal transport. The PSTN 122 typically utilizes PCM coding.

The SS 128, signaling gateway 130, and media gateway 132 are preferably distributed on the network 110 at locations that are effective and efficient given the particular embodiment. Preferably, the SS 128 is placed at a location chosen for its operational characteristics. For example, the SS 128 may be located on a link near a particular set of BTSs 112. The media gateway 132 is preferably placed at a location where it can efficiently interface with the PSTN 122 and/or PLMN 124. Embodiments of the system 100 can have multiple SSs 128, media gateways 132, and/or SGs 130 distributed on the network 110.

The OMC 120 is used by an administrator to interface with the BTSs 112, SS 128, signaling gateway 130, media gateway 132, DSN 118, and other entities on the IP network 110 to control and supervise the system. The OMC 120 is the logical equivalent of a control console for the devices and allows the administrator to specify and control available features, create and maintain subscriber profiles, configure the devices, review usage and billing records, perform maintenance, etc. The OMC 120 may also store copies of subscriber profiles that are used to synchronize with the HLR for mobility purposes. The subscriber profiles preferably contain information identifying the subscribers, identifying the enterprises with which the subscribers are associated, and describing the applications and features (i.e., rights and privileges) available to the subscribers.

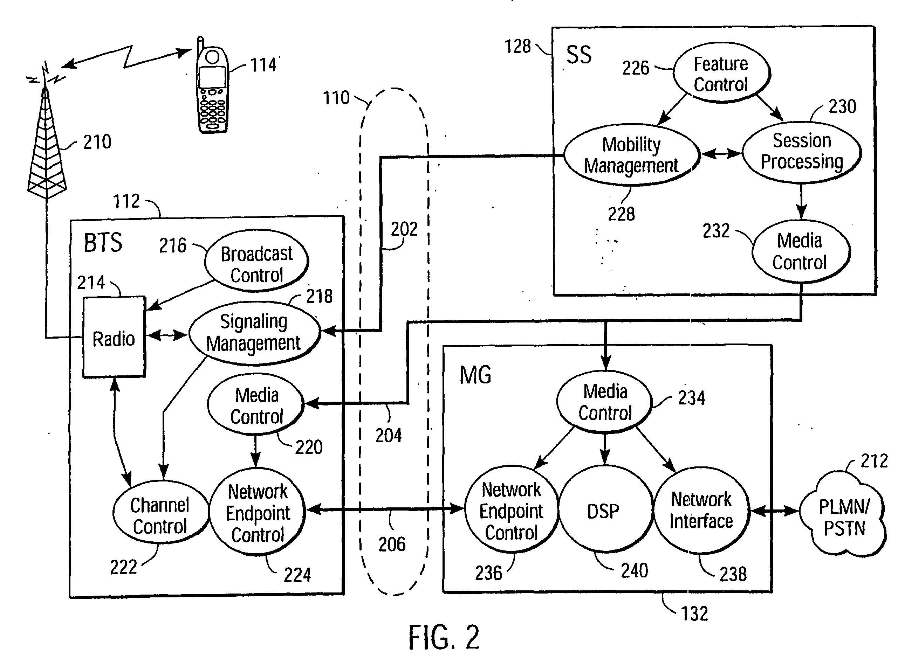

FIG. 2 is a high-level block diagram illustrating a portion of the telecommunications system 100 of FIG. 1 from a functional perspective. FIG. 2 illustrates a wireless mobile device 114 and a BTS 112. The BTS 112 is in communication with the SS 128 and the media gateway 132. Arrows between the modules 202, 204, 206 represent the communication pathways formed over the IP network 110. In one embodiment, paths 202 and 204 carry control signals while path 206 carries user media. The media gateway 132 is in communication with the PLMN and/or PSTN (individually and collectively referred to herein as the "telephone network 212").

The mobile device 114 preferably communicates with the BTS 112 via an air interface 210. The BTS 112 contains numerous functional modules for communicating with, and providing services to, the mobile device 114 via this interface. A radio module 214 provides the RF communications capabilities between the mobile device 114 and the BTS 112. The radio 214 preferably provides traffic channel capabilities to enable it to effectively communicate with a variety of mobile devices 114. A broadcast control module 216 controls the operation of the radio 214. This module 216 maintains the radio 214 in a ready state in order to provide access to the mobile devices 114 within range. The broadcast control module 216 preferably uses the radio 214 to keep a control/access channel available and transmitting. Mobile devices 114 can camp on the control/access channel in order to receive pages (i.e., in order to receive notifications from the BTS 112). The broadcast control module 216 also broadcasts parameters that allow the mobile devices 114 to access the communications network and broadcast services available through the BTS 112.

A signaling management module 218 interfaces with the radio 214 and a mobility management module 228 in the SS 128 via communications path 202 and controls the mobile messaging at the BTS 112. The signaling management module 218 maintains session context so that the correct mobile device 114 gets the messages intended for it. The signaling management module 218 also performs the message handling aspects involved in mobility management and session processing.

A media control module 220 in the BTS 112 interfaces with media control module 232 in the SS 128 via pathway 204 and provides connectivity across the IP network 110 as determined or required by session processing. Once session processing determines that a connection path is required, the media control modules 220, 232, 234 in the BTS 112, SS 128, and media gateway 132 create the logical connection across the IP network 110 by causing the data packets to be routed to the appropriate destinations. Thus, the operation of the media control module 220 is similar to traditional switching in that it creates, maintains, and releases communications paths in the communications system 100, except that the paths are logical paths over a packet-switched network.

A channel control module 222 provides the dedicated resources that are allocated to a mobile device 114 for a particular session. In one embodiment, each mobile device 114 that is active (e.g., in a voice call and/or another session) is assigned a separate traffic channel to use to transmit its media to/from the network for the session. In an embodiment using GSM, the channel control module 222 will provide the mobile device 114 with a time-division multiplexed (TDM) "time slot" for media transport over the air interface 210. In an embodiment using CDMA, the channel control module 222 will provide the "code" that constitutes the channel that the mobile device 114 uses for media transport. The channel control module 222 supervises and controls the mobile device 114 on the channel, as well as maintains basic radio channel functions. Preferably, the signaling management module 218 controls the operation of the channel control module 222.

A network endpoint control module 224 in the BTS 112 serves to control the individually-addressable endpoint interfaces at the BTS 112 through which user media are sent and received. The network endpoint control module 224 in the BTS 112 also preferably encapsulates the native user media in a format suitable for transmission via the IP network 110 (if necessary and/or desired). Likewise, when receiving user media from the network 110, the network endpoint control module 224 preferably decodes the user media into the native format of the mobile device 114 to which the media are destined (if necessary and/or desired). Path 206 represents a communication pathway for carrying user media between the media gateway 132 and the BTS 112.

Turning now to the SS 128, a feature control module 226 interacts with the mobility management module 228 and a session processing module 230 to provide enhanced calling features to the mobile devices 114. The enhanced calling features may include, for example, partial-number dialing, toll calling, call forwarding and transferring, conference calling, line camping, customized treatment depending upon the calling or called party, customized billing applications providing specialized billing reports, number portability, enhanced 911, concurrent and sequential ringing, etc. The enhanced calling features may also include non-call associated features, such as following and/or location-based services. Embodiments of the feature control module 226 can provide different enhanced calling features instead of, or in addition to, the ones listed here.

The mobility management module 228 interacts with the feature control 226 and session processing 230 modules to provide functionality for managing and providing service to the mobile devices 114. In general, the mobility management module 228 deals with issues related to the movement of the mobile devices 114. As such, the mobility management module 228 preferably supports features such as session roaming, session delivery, and handoff. The module 228 also preferably supports functionality addressing specialized features for wireless devices, such as functionality supporting privacy and authentication. In addition, the mobility management module 228 provides functionality supporting the wireless protocols utilized for the air interface 210 between the mobile device 114 and the radio 214.

The session processing module 230 includes functionality for setting up, tearing down, and accounting for sessions across the IP network 110 and, if necessary, other networks. The module 230 also supports traditional switching capabilities including alternate routing, network signaling, timing distribution, translation, traffic measurements and controls, etc. via the IP network 110. The media control module 232 in the SS 128 preferably interacts with the media control modules 220, 234 in the BTS 112 and media gateway 132 to provide connectivity across the IP network 110.

The media control module 234 in the media gateway 132 also interacts with the corresponding module in the SS 128 to provide connectivity. In addition, a network endpoint control module 236 in the media gateway 132 interacts with the corresponding module 224 in the BTS 112 to send and receive encapsulated user media via the IP network 110.

A network interface module 238 in the media gateway 132 preferably interfaces with the telephone network 212. As such, this module 238 is adapted to convert user media between the encoding utilized by the telecommunications system 100 and the encoding utilized by the telephone network 212. The network interface module 238 also preferably performs signaling for either inband or common channel protocols in order to support session setup between the telecommunications system 100 and systems on the telephone network 212. A digital signal processing (DSP) module 240 preferably interfaces with the network endpoint control module 236 and the network interface 238. The DSP module 240 supports the user media conversion functionality of the network interface module 238.

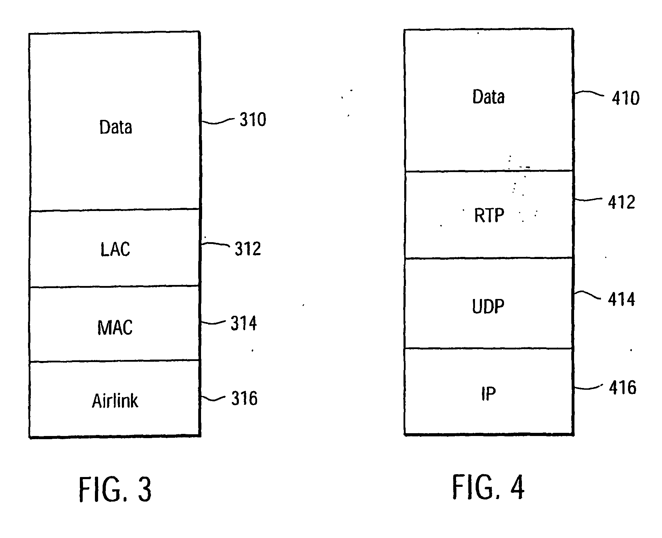

FIG. 3 is a block diagram illustrating the communications protocol stack in one embodiment of the air interface 210 through which the radio 214 and mobile device 114 communicate. The top layer of the air interface 214, the data layer 310, transports user media packets generated by the mobile device 114 and received by the BTS 112 or vice-versa. The user media packets are preferably coded in the native format of the mobile device 114.

The next two layers are the link access control (LAC) layer 312 and the media access control (MAC) layer 314. The LAC layer 312 governs the assembling of data into frames and the exchanging of data between data stations. The MAC layer 314, in turn, supports topology dependent functions. The airlink layer 316 is the physical layer of the air interface 210 and, in this case, is the RF carrier and respective modulation for the communications between the mobile device 114 and radio 214.

FIG. 4 illustrates the protocol stack for carrying user media on the pathway 206 between the network endpoint control module 224 in the BTS 112 and the endpoint control module 236 in the media gateway 132 according to an embodiment of the telecommunications system 100. The top layer of the stack is the data layer 410. This layer preferably carries user media encoded in the native format of the mobile device 114. In one embodiment, the mobile device 114 supports the GSM communications technology and the data layer 410 carries data encoded according to FR and/or EFR coding. In another embodiment, the mobile device 114 supports the CDMA communications technology and the data layer 410 carries data encoded according to EVRC and/or QCELP. Other embodiments can support other coding schemes.

The natively-encoded user media are preferably encapsulated in a real-time protocol (RTP) (or other streaming protocol) layer 412. The RTP provides a transport mechanism for moving the time-sensitive user media across the IP network. To this end, the RTP layer 412 enables functionality such as detecting packet loss and compensating for any delay jitter. The RTP layer 412 also supports QoS functionality.

A UDP layer 414 provides functionality for distinguishing different communications sessions (such as port numbers) and provides a checksum functionality for verifying that user media arrives at the destination intact. The UDP layer 414 preferably runs on top of the IP layer 416. The IP layer 416 provides functionality for routing data packets over the network 110.

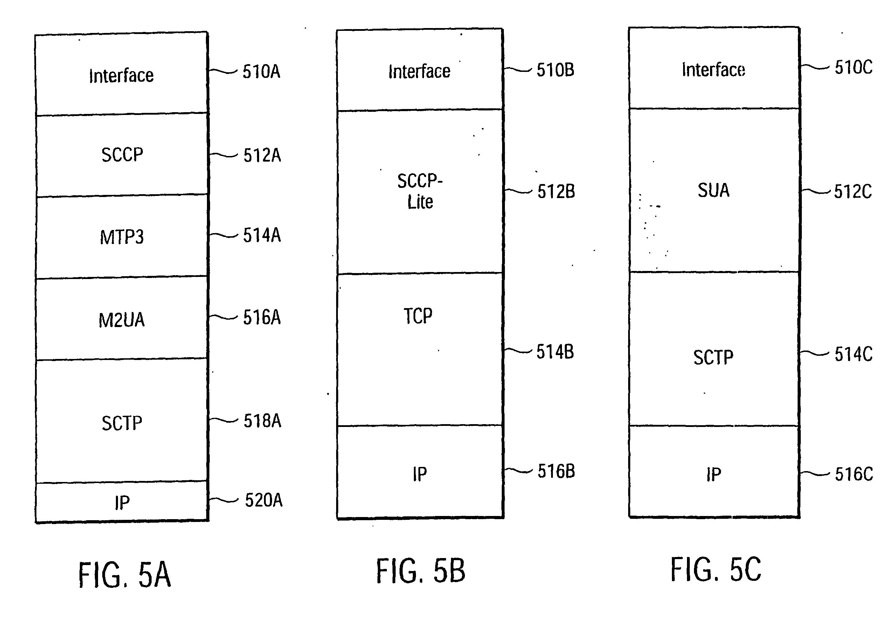

FIGS. 5A-C illustrate protocol stacks for carrying control signals over the pathway 202 between the mobility management module 228 of the SS 128 and the signaling management module 218 of the BTS 112 according to several embodiments of the telecommunications system 100. FIGS. 5A-C respectively illustrate different embodiments of the protocol stack. The embodiments are functionally equivalent, and different embodiments of the telecommunications system 100 can use any one of the described stacks (or multiple ones).

The top layer of the stack of FIG. 5A (and the other stacks) is the communications interface 510A. This interface carries messages for providing session control and mobility management to the BTSs 112, and to the mobile devices 114 via the BTSs. In embodiments of the system 100 supporting GSM mobile devices 114, the interface 510A is preferably the GSM-A interface. In embodiments of the system 100 supporting CDMA mobile devices 114, the interface 510A is preferably the Telecommunications Industry Association (TIA) interim standard IS-634 interface.

The next layer of the stack is the Signaling Connection Control Part (SCCP) layer 512A. This layer 512A contains messages that control signaling for connectionless and connection-oriented network services and address translation services. The SCCP layer 512A rests on a message transport part 3 (MTP3) layer 514A which provides functions and procedures related to message routing and network management. The MTP2-User Adaptation (M2UA) layer 516A is below the MTP3 layer 514 and provides a protocol for transport of MTP3 signaling messages over the IP network 110.

An SCTP layer 518A provides reliable transmission characteristics for the non-packet-based protocols being signaled across the IP network 110. The IP 520A layer provides the same functionality as the corresponding layer described with respect to FIG. 4.

The stack of FIG. 5B also has a communications interface as the top layer 510B. This layer 510B preferably provides the same functionality as the corresponding layer 510A in FIG. 5A. The next layer of the stack is the SCCP-LITE layer 512B. The SCCP-LITE layer 512B implements the SCCP-LITE protocol available from TELOS Technology, Inc. This protocol supports a subset of SCCP functionality and is specifically optimized for use on TCP/IP packet-based networks. Accordingly, the next two layers in the stack are the TCP 514B and IP layers 516B. The TCP layer 514B manages the dividing and reassembling of data into packets that are transported over the IP network 110 by the IP layer 516B.

The top layer 510C of the stack of FIG. 5C is a communications interface having the same functionality as corresponding layers 510A and 510B described above. In FIG. 5C, the layer 512C below the interface 510C is the SCCP User Adaptation (SUA) layer 512C. The SUA layer 512C supports the transport of SCCP user signaling over the IP using SCTP services. Accordingly, the SCTP layer 514C is below the SUA layer 512C and provides transport layer functions. The IP layer 516C provides the same functionality as the previously-discussed IP layers 522A, 516B.

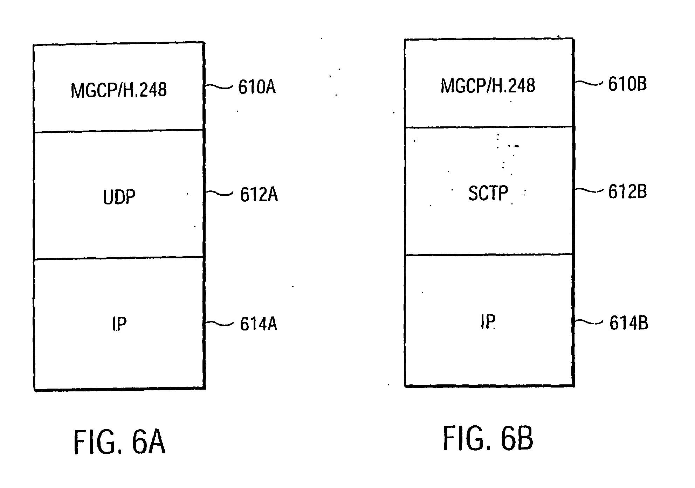

FIG. 6A illustrates a protocol stack for carrying control signals on the pathways 204 among the media control modules 220, 232, 234 of the BTS 112, SS 128, and media gateway 132 according to an embodiment of the telecommunications system 100. The top layer 610A of the stack is the Media Gateway Control Protocol (MGCP), H.248/Megaco, or a similar such media control protocol. These protocols are utilized to set up, maintain, and terminate media connections between multiple endpoints, as well as to play tones or announcements to endpoints. Preferably, the next two layers of the stack are for UDP 612A and IP 614A, respectively. These layers facilitate the transport and routing of MGCP or H.248 messages over the IP network 110.

FIG. 6B illustrates a protocol stack for carrying control signals on the pathways 204 among the media control modules 220, 232, 234 of the BTS 112, SS 128, and media gateway 132 according to another embodiment of the telecommunications system 100. The top layer 610B of the stack is the Media Gateway Control Protocol (MGCP), H.248/Megaco, or a similar such media control protocol. These protocols are utilized to set up, maintain, and terminate media connections between multiple endpoints, as well as to play tones or announcements to endpoints. Preferably, the next two layers of the stack are for SCTP 612B and IP 614B, respectively. These layers facilitate the transport and routing of MGCP or H.248 messages over the IP network 110.

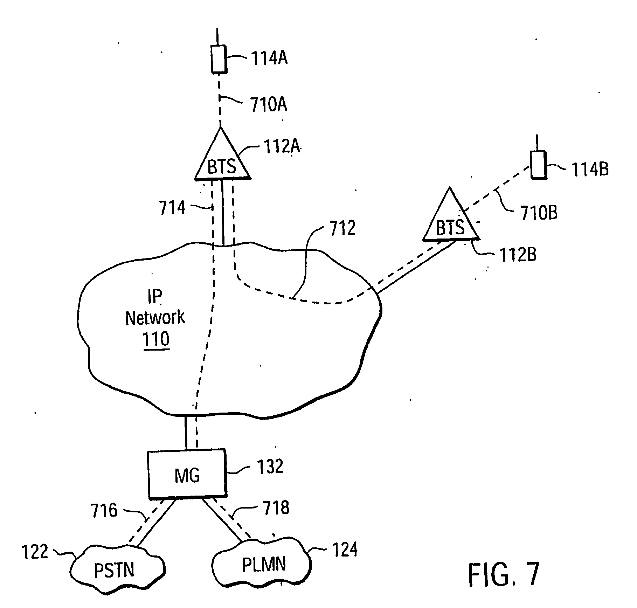

FIG. 7 is a high-level block diagram illustrating entities of the telecommunications system of FIG. 1 and illustrating examples of media flow paths through the system. FIG. 7 illustrates two mobile devices 114A, 114B each respectively communicating with a BTS 112A, 112B. The BTSs 112 communicate with the media gateway 132 via the IP network 110.

The mobile devices 114 communicate with their respective BTSs 112 via the air interface 210. The media flow path for the air interface 210 is identified with reference numeral 710. As described above, the user media on this portion of the path 710 are encoded according to the native format of the mobile device 114, such as FR, EFR, EVRC or QCELP.

Upon receiving user media from a mobile device 114, the BTS 112 encapsulates the natively-encoded media in a format suitable for transmission over the IP network 110. The BTS 112 acts under the direction of the SS 128 (not shown in FIG. 7) to route the encapsulated user media over the IP network 110 directly to the other endpoint of the session. For example, if the first 114A and second 114B mobile devices are on a session, the BTS 112A serving the first mobile device preferably routes the encapsulated media on a path 712 directly to the BTS 112B serving the second mobile device. The second BTS 112B, upon receiving the user media, preferably removes the encapsulation to obtain the natively-encoded data. The BTS 112B sends the user media to the mobile device 114B via the path 710B over the air interface.

Similarly, if the first mobile device 114A is on a session with a device on the PSTN 122 or PLMN 124, the BTS 112A preferably routes the user media on a path 714 to the media gateway 132 serving the PSTN and/or PLMN. The media gateway 132 extracts the user media from the encapsulation and, if necessary, converts the media into the native format of the network (i.e., PSTN 122 or PLMN 124) of the other device on the session. The media gateway 132 routes the converted user media on a path 716, 718 to the PSTN 122 or PLMN 124.

In sum, the telecommunications system 100 allows non-packet switched communications interfaces and protocols to be used over a packet switched network. Using the network in this way allows the media and control functionality of the system 100 to be distributed throughout the network in an efficient and cost-effective manner and eliminates the need for separate mobile switching centers and base station controllers.

The above description is included to illustrate the operation of the preferred embodiments and is not meant to limit the scope of the invention. The scope of the invention is to be limited only by the following claims.

## Claims

1. A telecommunications system for utilizing a packet switched network (110) adapted to carry user media encapsulated in a packet-based representation to provide communications capabilities to mobile devices, the system comprising:
a base transceiver station, further referred to as BTS, (112) in communication with the packet switched network (110) and adapted to communicate with a mobile device (114) during a session, the BTS (112) adapted to receive user media encoded in a representation native to the mobile device (114) from the mobile device (114) and encapsulate the user media in a packet-based representation for communication over the packet switched network (110); and
a media gateway module (132) in communication with the packet switched network (110) and forming a gateway between the packet switched network (110) and a telephone network (122,124), the media gateway (132) adapted to receive the user media encapsulated in the packet-based representation and communicate the user media to the telephone network (122,124) in an encoding native to the telephone network (122,124);
in which the media gateway module (132) is associated with an endpoint for the session and in that the media gateway module (132) decapsulates the user media from the packet-based representation and converts the user media into an encoding format utilized by the telephone network (122,124) if the user media is not already in such an encoding format, whereby the user media is transmitted over the packet switched network (110) in the encapsulated packet-based representation from the BTS (112) to the media gateway module (132);
wherein the system includes a plurality of BTSs (112) and a plurality of mobile devices (114); and wherein communication between two mobile devices (114) of the system is transmitted as encapsulated user media between respective BTSs (112) without passing through the media gateway module (132).

2. The system of claim 1, wherein the media gateway module (132) is remote from the BTS (112).

3. The system of claim 1 or claim 2, wherein the telephone network is a public switched telephone network (122).

4. The system of any preceding claim, wherein the telephone network is a public land mobile network (124).

5. The system of any preceding claim, wherein the media gateway module (132) comprises a network interface module (238) adapted to convert user media between the native encoding of the mobile device (114) and the native encoding of the telephone network (122, 124).

6. The system of any preceding claim, further comprising a media control module (234) adapted to create, maintain, and release communications paths for routing the encapsulated user media across the packet switched network (110).

7. The system of claim 6, wherein the media control module (234) is further adapted to create a communication path routing the user media directly to an endpoint of a session.

8. The system of any preceding claim, further comprising a softswitch module (128) in communication with the packet switched network (110) and adapted to provide media connection signalling for the mobile device (114) via control signals carried over the packet switched network (110).

9. The system of claim 8, wherein the control signals are non-packet-based control signals encapsulated in a packet-based representation.

10. The system of claim 8 or claim 9, wherein the softswitch module (128) comprises a mobility management module (228) adapted to provide mobility management for the mobile device (114) via control signals carried over the packet switched network (110).

11. The system of any of claims 8 to 10, wherein the softswitch module (128) comprises a feature control module (226) adapted to provide enhanced calling services to the mobile device (114) via control signals carried over the packet switched network (110).

12. The system of any of claims 8 to 11, wherein the softswitch module (128) comprises a session processing module (230) adapted to set up, tear down, and account for sessions utilizing the mobile device (114) via control signals carried over the packet switched network (110).

13. The system of any preceding claim, wherein the BTS (112) comprises a signalling management module (218) adapted to perform signalling management for the mobile device (114) responsive to control signals received via the packet switched network (110).

14. A method of utilizing a packet switched network (110) adapted to carry user media encapsulated in a packet-based representation to provide communications capabilities to mobile devices (114), the network comprising a plurality of mobile devices (114) and a plurality of base transceiver stations, further referred to as BTSs, (112) in communication with the packet switched network (110) and adapted to communicate with a mobile device (114) during a session; the method comprising:
exchanging user media between a mobile device (114) and a BTS (112), the user media encoded in a representation native to the mobile device (114);
encapsulating the encoded user media in a packet-based representation adapted for communication via the packet switched network (110);
determining whether the user media is directed to a destination on a public telephone network (122,124) or to a destination which is a mobile device (114) communicating with the packet switched network (110);
in the former case, transmitting the encapsulated media to a media gateway module (132) coupling the packet switched network (110) to a telephone network (122,124), the media gateway module (132) being associated with the endpoint of a session; and receiving the encapsulated media at the media gateway module (132) and providing the user media to a telephone network (122,124), the provided user media encoded in a representation native to the telephone network (122,124); and
in the latter case, transmitting the encapsulated media via the packet switched network (110) to a BTS (112) where it is decapsulated and exchanged with a mobile device without passing through a media gateway module (132).

15. The method of claim 14, wherein the telephone network is a public switched telephone network (122) having a native representation of the user media different than the native representation of the mobile device (114).

16. The method of claim 14, wherein the telephone network is a public land mobile network (124).

17. The method of any of claims 14 to 16, wherein the providing step comprises the step of converting the user media from the native encoding of the mobile device to the native encoding of the telephone network (122,124).

18. The method of any of claims 14 to 17, further comprising the step of creating a communication path for routing the user media directly to an endpoint of a session via the packet switched network.

19. The method of any of claims 14 to 18, further comprising providing media connection signalling for the mobile device (114) via control signals carried over the packet switched network (110).

20. The method of claim 19, wherein the control signals are non-packet-based control signals encapsulated in a packet-based representation.

21. The method of any of claims 14 to 20, further comprising providing mobility management for the mobile device (114) via control signals carried over the packet switched network (110).

22. The method of any of claims 14 to 21, further comprising providing enhanced calling services to the mobile device (114) via control signals carried over the packet switched network (110).

23. The method of any of claims 14 to 22, further comprising setting up, tearing down, and accounting for sessions utilizing the mobile device (114) via control signals carried over the packet switched network (110).

24. The method of any of claims 14 to 23, further comprising providing signalling management for the mobile device responsive to control signals received via the packet switched network.

25. A base transceiver station, hereinafter referred to as BTS, (112) for interfacing with a packet switched network (110) to provide communication capabilities to mobile devices (114), the BTS (112) comprising:
a communications module (214,216) for exchanging user media with a mobile device (114), the user media encoded in a representation native to the mobile device (114);
a signalling management module (218), coupled to the communications module (214,216), for managing messaging for the mobile device (114) responsive to control signals received via the packet switched network (110); and
a media control module (220) for encapsulating user media in a packet-based representation and for routing the encapsulated user media on a path (206) over the packet switched network (110) directly to an endpoint of a session responsive to control signals received via the packet switched network (110), wherein the user media is not transcoded in any intervening network nodes between the base transceiver station (112) and the gateway (132);
wherein the media control module (220) is adapted for selectively routing the encapsulated user media to an endpoint at a media gateway (132) remote from the BTS, the media gateway (132) interfacing with a telephone network (122, 124), or to an endpoint at a second BTS, the second BTS interfacing with a second mobile device (114).

26. The BTS of claim 25, wherein the communications module (214,216) comprises a radio (214) for exchanging user media with the mobile device (114) via an air interface.

27. The BTS of claim 25 or claim 26, wherein the control signals are received from a switch controller remote from the BTS.

## Patentansprüche

1. Ein Telekommunikationssystem zum Benutzen eines paketvermittelten Netzes (110), das angepasst ist, um Benutzermedien, die in einer paketbasierten Darstellung verkapselt sind, zu tragen, um Mobilgeräten Kommunikationsfähigkeiten bereitzustellen, wobei das System Folgendes beinhaltet:
eine Funkbasisstation, die im Weiteren als BTS (112) bezeichnet wird, in Kommunikation mit dem paketvermittelten Netz (110) steht und angepasst ist, um während einer Sitzung mit einem Mobilgerät (114) zu kommunizieren, wobei die BTS (112) angepasst ist, um in einer für das Mobilgerät (114) systemspezifischen Darstellung kodierte Benutzermedien von dem Mobilgerät (114) zu empfangen und die Benutzermedien in einer paketbasierten Darstellung zur Kommunikation über das paketvermittelte Netz (110) zu verkapseln; und
ein Mediennetzübergangsmodul (132), das in Kommunikation mit dem paketvermittelten Netz (110) steht und einen Netzübergang zwischen dem paketvermittelten Netz (110) und einem Telefonnetz (122, 124) bildet, wobei der Mediennetzübergang (132) angepasst ist, um die Benutzermedien, die in der paketbasierten Darstellung verkapselt sind, zu empfangen und die Benutzermedien in einer für das Telefonnetz (122, 124) systemspezifischen Kodierung an das Telefonnetz (122, 124) zu übermitteln.
wobei das Netzübergangsmodul (132) für Medien mit einem Endpunkt für die Sitzung assoziiert ist, und wobei das Netzübergangsmodul (132) für Medien die Benutzermedien aus der paketbasierten Darstellung entkapselt und die Benutzermedien in ein Kodierungsformat, das von dem Telefonnetz (122, 124) benutzt wird, konvertiert, wenn die Benutzermedien nicht bereits in einem derartigen Kodierungsformat vorhanden sind, wodurch die Benutzermedien in der verkapselten paketbasierten Darstellung über das paketvermittelte Netz (110) von der BTS (112) an das Netzübergangsmodul (132) für Medien übertragen werden;
wobei das System eine Vielzahl von BTS (112) und eine Vielzahl von Mobilgeräten (114) umfasst; und wobei eine Kommunikation zwischen zwei Mobilgeräten (114) des Systems als verkapselte Benutzermedien zwischen entsprechenden BTS (112) übertragen wird, ohne durch das Netzübergangsmodul (132) für Medien zu gehen.

2. System gemäß Anspruch 1, wobei sich das Netzübergangsmodul (132) für Medien von der BTS (112) entfernt befindet.

3. System gemäß Anspruch 1 oder Anspruch 2, wobei das Telefonnetz ein öffentliches Telefonnetz (122) ist.

4. System gemäß einem der vorhergehenden Ansprüche, wobei das Telefonnetz ein öffentliches landgestütztes Mobilfunknetz (124) ist.

5. System gemäß einem der vorhergehenden Ansprüche, wobei das Netzübergangsmodul (132) für Medien ein Netzschnittstellenmodul (238) beinhaltet, das angepasst ist, um Benutzermedien zwischen der systemspezifischen Kodierung des Mobilgeräts (114) und der systemspezifischen Kodierung des Telefonnetzes (122, 124) zu konvertieren.

6. System gemäß einem der vorhergehenden Ansprüche, das des Weiteren ein Mediensteuermodul (234) beinhaltet, das angepasst ist, um Kommunikationspfade zum Weiterleiten der verkapselten Benutzermedien über das paketvermittelte Netz (110) zu erzeugen, aufrechtzuerhalten und auszulösen.

7. System gemäß Anspruch 6, wobei das Mediensteuermodul (234) des Weiteren angepasst ist, um einen Kommunikationspfad zu erzeugen, der die Benutzermedien direkt an einen Endpunkt einer Sitzung weiterleitet.

8. System gemäß einem der vorhergehenden Ansprüche, das des Weiteren ein Softswitchmodul (128) beinhaltet, das mit dem paketvermittelten Netz (110) in Kommunikation steht und angepasst ist, um über Steuersignale, die über das paketvermittelte Netz (110) getragen werden, für das Mobilgerät (114) Medienverbindungssignalisierung bereitzustellen.

9. System gemäß Anspruch 8, wobei die Steuersignale nicht paketbasierte Steuersignale sind, die in einer paketbasierten Darstellung verkapselt sind.

10. System gemäß Anspruch 8 oder Anspruch 9, wobei das Softswitchmodul (128) ein Mobilitätsverwaltungsmodul (228) beinhaltet, das angepasst ist, um über Steuersignale, die über das paketvermittelte Netz (110) getragen werden, Mobilitätsverwaltung für das Mobilgerät (114) bereitzustellen.

11. System gemäß einem der Ansprüche 8 bis 10, wobei das Softswitchmodul (128) ein Leistungsmerkmalsteuermodul (226) beinhaltet, das angepasst ist, um über Steuersignale, die über das paketvermittelte Netz (110) getragen werden, dem Mobilgerät (114) verbesserte Anrufdienstleistungen bereitzustellen.

12. System gemäß einem der Ansprüche 8 bis 11, wobei das Softswitchmodul (128) ein Sitzungsverarbeitungsmodul (230) beinhaltet, das angepasst ist, um über Steuersignale, die über das paketvermittelte Netz (110) getragen werden, Sitzungen, die das Mobilgerät (114) benutzen, aufzubauen, abzubauen und abzurechnen.

13. System gemäß einem der vorhergehenden Ansprüche, wobei die BTS (112) ein Signalisierungssteuermodul (218) beinhaltet, das angepasst ist, um Signalisierungssteuerung für das Mobilgerät (114), als Reaktion auf Steuersignale, die über das paketvermittelte Netz (110) empfangen werden, durchzuführen.

14. Ein Verfahren zum Benutzen eines paketvermittelten Netzes (110), das angepasst ist, um Benutzermedien zu tragen, die in einer paketbasierten Darstellung verkapselt sind, um Mobilgeräten (114) Kommunikationsfähigkeiten bereitzustellen, wobei das Netz eine Vielzahl von Mobilgeräten (114) und ein Vielzahl von Funkbasisstationen, die im Weiteren als BTS (112) bezeichnet werden, in Kommunikation mit dem paketvermittelten Netz (110) stehen und angepasst sind, um während einer Sitzung mit einem Mobilgerät (114) zu kommunizieren, beinhaltet; wobei das Verfahren Folgendes beinhaltet:
Austauschen von Benutzermedien zwischen einem Mobilgerät (114) und einer BTS (112), wobei die Benutzermedien in einer für das Mobilgerät (114) systemspezifischen Darstellung kodiert sind;
Verkapseln der kodierten Benutzermedien in einer paketbasierten Darstellung, die zur Kommunikation über das paketvermittelte Netz (110) angepasst ist;
Bestimmen, ob die Benutzermedien auf ein Ziel in einem öffentlichen Telefonnetz (122, 124) oder zu einem Ziel, das ein Mobilgerät (114) ist, das mit dem paketvermittelten Netz (110) kommuniziert, gerichtet sind;
in dem ersteren Fall Übertragen der verkapselten Medien an ein Netzübergangsmodul (132) für Medien, das das paketvermittelte Netz (110) an ein Telefonnetz (122, 124) koppelt, wobei das Netzübergangsmodul (132) für Medien mit dem Endpunkt einer Sitzung assoziiert ist; und Empfangen der verkapselten Medien an dem Netzübergangsmodul (132) für Medien und Bereitstellen der Benutzermedien für ein Telefonnetz (122, 124), wobei die bereitgestellten Benutzermedien in einer für das Telefonnetz (122, 124) systemspezifischen Darstellung kodiert sind; und
in dem letzteren Fall Übertragen der verkapselten Medien über das paketvermittelte Netz (110) an eine BTS (112), wo sie entkapselt und mit einem Mobilgerät ausgetauscht werden, ohne durch ein Netzübergangsmodul (132) für Medien zu gehen.

15. Verfahren gemäß Anspruch 14, wobei das Telefonnetz ein öffentliches Telefonnetz (122) ist, das eine systemspezifische Darstellung der Benutzermedien aufweist, die sich von der systemspezifischen Darstellung des Mobilgeräts (114) unterscheidet.

16. Verfahren gemäß Anspruch 14, wobei das Telefonnetz ein öffentliches landgestütztes Mobilfunknetz (124) ist.

17. Verfahren gemäß einem der Ansprüche 14 bis 16, wobei der Schritt des Bereitstellens den Schritt des Konvertierens der Benutzermedien von der systemspezifischen Kodierung des Mobilgeräts in die systemspezifische Kodierung des Telefonnetzes (122, 124) beinhaltet.

18. Verfahren gemäß einem der Ansprüche 14 bis 17, das des Weiteren den Schritt des Erzeugens eines Kommunikationspfads zum Weiterleiten der Benutzermedien über das paketvermittelte Netz direkt an einen Endpunkt einer Sitzung beinhaltet.

19. Verfahren gemäß einem der Ansprüche 14 bis 18, das des Weiteren das Bereitstellen von Medienverbindungssignalisierung für das Mobilgerät (114) über Steuersignale, die über das paketvermittelte Netz (110) getragen werden, beinhaltet.

20. Verfahren gemäß Anspruch 19, wobei die Steuersignale nicht paketbasierte Steuersignale sind, die in einer paketbasierten Darstellung verkapselt sind.

21. Verfahren gemäß einem der Ansprüche 14 bis 20, das des Weiteren das Bereitstellen von Mobilitätsverwaltung für das Mobilgerät (114) über Steuersignale, die über das paketvermittelte Netz (110) getragen werden, beinhaltet.

22. Verfahren gemäß einem der Ansprüche 14 bis 21, das des Weiteren das Bereitstellen von verbesserten Anrufdienstleistungen für das Mobilgerät (114) über Steuersignale, die über das paketvermittelte Netz (110) getragen werden, beinhaltet.

23. Verfahren gemäß einem der Ansprüche 14 bis 22, das des Weiteren das Aufbauen, Abbauen und Abrechnen von Sitzungen, die das Mobilgerät (114) benutzen, über Steuersignale, die über das paketvermittelte Netz (110) getragen werden, beinhaltet.

24. Verfahren gemäß einem der Ansprüche 14 bis 23, das des Weiteren das Bereitstellen von Signalisierungssteuerung für das Mobilgerät, als Reaktion auf Steuersignale, die über das paketvermittelte Netz empfangen werden, beinhaltet.

25. Eine Funkbasisstation, die nachstehend als BTS (112) bezeichnet wird, zum Anschließen an ein paketvermitteltes Netz (110), um Mobilgeräten (114) Kommunikationsfähigkeiten bereitzustellen, wobei die BTS (112) Folgendes beinhaltet:
ein Kommunikationsmodul (214, 216) zum Austauschen von Benutzermedien mit einem Mobilgerät (114), wobei die Benutzermedien in einer für das Mobilgerät (114) systemspezifischen Darstellung kodiert sind;
ein Signalisierungssteuerungsmodul (218), das an das Kommunikationsmodul (214, 216) gekoppelt ist zum Verwalten von Mitteilungsübermittlung für das Mobilgerät (114), als Reaktion auf Steuersignale, die über das paketvermittelte Netz (110) empfangen werden; und
ein Mediensteuermodul (220) zum Verkapseln von Benutzermedien in einer paketbasierten Darstellung und zum Weiterleiten der verkapselten Benutzermedien auf einem Pfad (206) über das paketvermittelte Netz (110) direkt an einen Endpunkt einer Sitzung, als Reaktion auf Steuersignale, die über das paketvermittelte Netz (110) empfangen werden, wobei die Benutzermedien nicht in etwaigen intervenierenden Netzknoten zwischen der Funkbasisstation (112) und dem Netzübergang (132) umgeschlüsselt werden;
wobei das Mediensteuermodul (220) angepasst ist, um die verkapselten Benutzermedien selektiv an einen Endpunkt an einem Netzübergang (132) für Medien entfernt von der BTS weiterzuleiten, wobei der Netzübergang (132) für Medien an ein Telefonnetz (122, 124) angeschlossen ist, oder an einen Endpunkt an einer zweiten BTS, wobei die zweite BTS an ein zweites Mobilgerät (114) angeschlossen ist.

26. BTS gemäß Anspruch 25, wobei das Kommunikationsmodul (214, 216) ein Funkgerät (214) zum Austauschen von Benutzermedien mit dem Mobilgerät (114) über eine Luftschnittstelle beinhaltet.

27. BTS gemäß Anspruch 25 oder Anspruch 26, wobei die Steuersignale von einer Vermittlersteuerung, die sich entfernt von der BTS befindet, empfangen werden.

## Revendications

1. Un système de télécommunication destiné à l'utilisation d'un réseau à commutation de paquets (110) adapté pour transporter des supports utilisateurs encapsulés dans une représentation par paquets pour fournir des capacités de communication à des dispositifs mobiles, le système comprenant :
une station émetteur-récepteur de base, appelée en outre BTS (112), en communication avec le réseau à commutation de paquets (110) et adaptée pour communiquer avec un dispositif mobile (114) pendant une session, la BTS (112) étant adaptée pour recevoir, du dispositif mobile (114), des supports utilisateurs codés dans une représentation native au dispositif mobile (114) et encapsuler les supports utilisateurs dans une représentation par paquets pour les communiquer sur le réseau à commutation de paquets (110) ; et
un module formant passerelle de supports (132) en communication avec le réseau à commutation de paquets (110) et formant une passerelle entre le réseau à commutation de paquets (110) et un réseau téléphonique (122, 124), la passerelle de supports (132) étant adaptée pour recevoir les supports utilisateurs encapsulés dans la représentation par paquets et communiquer les supports utilisateurs au réseau téléphonique (122,124) dans un codage natif au réseau téléphonique (122,124) ;
dans lequel le module formant passerelle de supports (132) est associé à un point d'extrémité pour la session et en ce que le module formant passerelle de supports (132) décapsule les supports utilisateurs de la représentation par paquets et convertit les supports utilisateurs en un format de codage utilisé par le réseau téléphonique (122,124) si les supports utilisateurs ne se trouvent pas déjà dans un format de codage de la sorte, les supports utilisateurs étant transmis sur le réseau à commutation de paquets (110) dans la représentation par paquets encapsulée de la BTS (112) au module formant passerelle de supports (132) ;
dans lequel le système inclut une pluralité de BTS (112) et une pluralité de dispositifs mobiles (114) ; et dans lequel une communication entre deux dispositifs mobiles (114) du système est transmise sous forme de supports utilisateurs encapsulés entre des BTS respectives (112) sans passer par le module formant passerelle de supports (132).

2. Le système de la revendication 1, dans lequel le module formant passerelle de supports (132) se trouve éloigné de la BTS (112).

3. Le système de la revendication 1 ou de la revendication 2, dans lequel le réseau téléphonique est un réseau téléphonique commuté public (122).

4. Le système de n'importe quelle revendication précédente, dans lequel le réseau téléphonique est un réseau mobile terrestre public (124).

5. Le système de n'importe quelle revendication précédente, dans lequel le module formant passerelle de supports (132) comprend un module d'interface réseau (238) adapté pour convertir des supports utilisateurs entre le codage natif du dispositif mobile (114) et le codage natif du réseau téléphonique (122, 124).

6. Le système de n'importe quelle revendication précédente, comprenant en outre un module de contrôle de supports (234) adapté pour créer, maintenir et libérer des voies de communication destinées à acheminer les supports utilisateurs encapsulés sur le réseau à commutation de paquets (110).

7. Le système de la revendication 6, dans lequel le module de contrôle de supports (234) est adapté en outre pour créer une voie de communication acheminant les supports utilisateurs directement vers un point d'extrémité d'une session.

8. Le système de n'importe quelle revendication précédente, comprenant en outre un module formant commutateur logiciel (128) en communication avec le réseau à commutation de paquets (110) et adapté pour fournir une signalisation de connexion de supports pour le dispositif mobile (114) via des signaux de contrôle transportés sur le réseau à commutation de paquets (110).

9. Le système de la revendication 8, dans lequel les signaux de contrôle sont des signaux de contrôle qui ne sont pas par paquets encapsulés dans une représentation par paquets.

10. Le système de la revendication 8 ou de la revendication 9, dans lequel le module formant commutateur logiciel (128) comprend un module de gestion de mobilité (228) adapté pour fournir une gestion de mobilité pour le dispositif mobile (114) via des signaux de contrôle transportés sur le réseau à commutation de paquets (110).

11. Le système de n'importe lesquelles des revendications 8 à 10, dans lequel le module formant commutateur logiciel (128) comprend un module de contrôle d'attribut (226) adapté pour fournir des services d'appel améliorés au dispositif mobile (114) via des signaux de contrôle transportés sur le réseau à commutation de paquets (110).

12. Le système de n'importe lesquelles des revendications 8 à 11, dans lequel le module formant commutateur logiciel (128) comprend un module de traitement de session (230) adapté pour établir, démonter et rendre compte de sessions utilisant le dispositif mobile (114) via des signaux de contrôle transportés sur le réseau à commutation de paquets (110).

13. Le système de n'importe quelle revendication précédente, dans lequel la BTS (112) comprend un module de gestion de signalisation (218) adapté pour effectuer une gestion de signalisation pour le dispositif mobile (114) sensible à des signaux de contrôle reçus via le réseau à commutation de paquets (110).

14. Une méthode d'utilisation d'un réseau à commutation de paquets (110) adapté pour transporter des supports utilisateurs encapsulés dans une représentation par paquets pour fournir des capacités de communication à des dispositifs mobiles (114), le réseau comprenant une pluralité de dispositifs mobiles (114) et une pluralité de stations émetteur-récepteur de base, appelées en outre BTS (112), en communication avec le réseau à commutation de paquets (110) et adaptées pour communiquer avec un dispositif mobile (114) pendant une session ; la méthode comprenant :
échanger des supports utilisateurs entre un dispositif mobile (114) et une BTS (112), les supports utilisateurs étant codés dans une représentation native au dispositif mobile (114) ;
encapsuler les supports utilisateurs codés dans une représentation par paquets adaptée pour les communiquer via le réseau à commutation de paquets (110);
déterminer si les supports utilisateurs sont affectés à une destination sur un réseau téléphonique public (122, 124) ou à une destination qui est un dispositif mobile (114) communiquant avec le réseau à commutation de paquets (110) ;
dans le premier cas, transmettre les supports encapsulés à un module formant passerelle de supports (132) couplant le réseau à commutation de paquets (110) à un réseau téléphonique (122, 124), le module formant passerelle de supports (132) étant associé au point d'extrémité d'une session ; et recevoir les supports encapsulés au niveau du module formant passerelle de supports (132) et fournir les supports utilisateurs à un réseau téléphonique (122, 124), les supports utilisateurs fournis étant codés dans une représentation native au réseau téléphonique (122, 124) ; et
dans le dernier cas, transmettre les supports encapsulés via le réseau à commutation de paquets (110) à une BTS (112) où ils sont décapsulés et échangés avec un dispositif mobile sans passer par un module formant passerelle média (132).

15. La méthode de la revendication 14, dans laquelle le réseau téléphonique est un réseau téléphonique commuté public (122) ayant une représentation native aux supports utilisateurs différente de la représentation native au dispositif mobile (114).

16. La méthode de la revendication 14, dans laquelle le réseau téléphonique est un réseau mobile terrestre public (124).

17. La méthode de n'importe lesquelles des revendications 14 à 16, dans laquelle l'étape de fournir comprend l'étape de convertir les supports utilisateurs du codage natif au dispositif mobile en codage natif au réseau téléphonique (122, 124).

18. La méthode de n'importe lesquelles des revendications 14 à 17, comprenant en outre l'étape de créer une voie de communication destinée à acheminer les supports utilisateurs directement vers un point d'extrémité d'une session via le réseau à commutation de paquets.

19. La méthode de n'importe lesquelles des revendications 14 à 18, comprenant en outre fournir une signalisation de connexion de supports pour le dispositif mobile (114) via des signaux de contrôle transportés sur le réseau à commutation de paquets (110).

20. La méthode de la revendication 19, dans laquelle les signaux de contrôle sont des signaux de contrôle qui ne sont pas par paquets encapsulés dans une représentation par paquets.

21. La méthode de n'importe lesquelles des revendications 14 à 20, comprenant en outre fournir une gestion de mobilité pour le dispositif mobile (114) via des signaux de contrôle transportés sur le réseau à commutation de paquets (110).

22. La méthode de n'importe lesquelles des revendications 14 à 21, comprenant en outre fournir des services d'appel améliorés au dispositif mobile (114) via des signaux de contrôle transportés sur le réseau à commutation de paquets (110).

23. La méthode de n'importe lesquelles des revendications 14 à 22, comprenant en outre établir, démonter et rendre compte de sessions utilisant le dispositif mobile (114) via des signaux de contrôle transportés sur le réseau à commutation de paquets (110).

24. La méthode de n'importe lesquelles des revendications 14 à 23, comprenant en outre fournir une gestion de signalisation pour le dispositif mobile sensible à des signaux de contrôle reçus via le réseau à commutation de paquets.

25. Une station émetteur-récepteur de base, ci-après appelée BTS (112), destinée à interfacer avec un réseau à commutation de paquets (110) pour fournir des capacités de communication à des dispositifs mobiles (114), la BTS (112) comprenant :
un module de communication (214, 216) destiné à échanger des supports utilisateurs avec un dispositif mobile (114), les supports utilisateurs étant codés dans une représentation native au dispositif mobile (114) ;
un module de gestion de signalisation (218), couplé au module de communication (214, 216), destiné à gérer une messagerie pour le dispositif mobile (114) sensible à des signaux de contrôle reçus via le réseau à commutation de paquets (110) ; et
un module de contrôle de supports (220) destiné à encapsuler les supports utilisateurs dans une représentation par paquets et à acheminer les supports utilisateurs encapsulés sur une voie (206) sur le réseau à commutation de paquets (110) directement vers un point d'extrémité d'une session sensible à des signaux de contrôle reçus via le réseau à commutation de paquets (110), dans laquelle les supports utilisateurs ne sont transcodés dans aucun noeud de réseau intervenant entre la station émetteur-récepteur de base (112) et la passerelle (132) ;
dans laquelle le module de contrôle de supports (220) est adapté pour acheminer de façon sélective les supports utilisateurs encapsulés vers un point d'extrémité au niveau d'une passerelle de supports (132) éloignée de la BTS, la passerelle de supports (132) interfaçant avec un réseau téléphonique (122, 124), ou vers un point d'extrémité au niveau d'une deuxième BTS, la deuxième BTS interfaçant avec un deuxième dispositif mobile (114).

26. La BTS de la revendication 25, dans laquelle le module de communication (214, 216) comprend une radio (214) destinée à échanger des supports utilisateurs avec le dispositif mobile (114) via une interface hertzienne.

27. La BTS de la revendication 25 ou de la revendication 26, dans laquelle les signaux de contrôle sont reçus d'un contrôleur de commutation éloigné de la BTS.
